(19) Europäisches Patentamt
European Patent Office
Office européen des brevets

(11) Publication number: **0 013 072**
**B1**

(12) **EUROPEAN PATENT SPECIFICATION**

(45) Date of publication of patent specification: **13.04.83**

(51) Int. Cl.³: **C 07 C 91/06** //C08L95/00

(21) Application number: **79302516.4**

(22) Date of filing: **09.11.79**

# (54) Long chain amine derivatives and process for their preparation.

(30) Priority: **30.11.78 GB 4663878**

(43) Date of publication of application:
**09.07.80 Bulletin 80/14**

(45) Publication of the grant of the patent:
**13.04.83 Bulletin 83/15**

(84) Designated Contracting States:
**BE CH DE FR GB IT NL SE**

(56) References cited:
**DE - B - 1 165 930**
**FR - A - 1 277 817**
**FR - A - 2 181 881**
**US - A - 3 043 789**
**US - A - 3 598 547**

(73) Proprietor: **IMPERIAL CHEMICAL INDUSTRIES PLC**
**Imperial Chemical House Millbank**
**London SW1P 3JF (GB)**

(72) Inventor: **Smith, Geoffrey Edwin Blaker**
**30 Connaught Road**
**Nunthorpe, Middlesbrough Cleveland (GB)**
Inventor: **Joy, David Richard**
**16 Watchgate**
**Nunthorpe, Middlesbrough (GB)**

(74) Representative: **Martin, David Lincoln et al,**
**Imperial Chemical Industries PLC Legal Department: Patents Thames House North Millbank**
**London SW1P 4QG (GB)**

**EP 0 013 072 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Long chain amine derivatives and process for their preparation

This Invention relates to hydroxylated amines, to compositions based on these amines and to the manufacture and use of these amines and compositions.

Compositions based on long chain amines and their derivatives have been proposed for a wide variety of uses, for example as fabric softening agents and as emulsifiers. However, such prior art compositions have not always been entirely satisfactory, for example because their degree of effectiveness is less than might be desired or because they are difficult to handle.

French Patent Specification No. 1,277,817 describes a process for stabilising hydrocarbon oils, especially oils which are heavier than gasoline, for example fuel oils, against deterioration during manufacture, use, transportation and/or storage. The process involves incorporating a small amount, for example 0.001 to 1% by weight, of an inhibitor in the oil, the inhibitor having the general formula

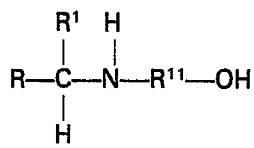

where R and $R^1$ are aliphatic hydrocarbon groups having a combined total of at least 7 carbon atoms and $R^{11}$ is an alkylene group having a straight chain portion of from 2 to 4 carbon atoms linking the N ad O atoms. Preferred inhibitors include N-(1-methylheptyl)ethanolamine and N-(1-heptadecyloctyl)propanolamine.

French Patent Specification No. 2,181,881 describes a process for giving bituminous substances a good adhesion to stone materials by adding to the bituminous substance at least one long chain ($C_8$ to $C_{20}$) primary amine which is soluble in the bituminous substance, for example stearylamine and at least one alkanolamine of formula $(HOC_nH_{2n})_p\,NH_{3-p}$ where n is a number between 2 and 4 and p is a number between 1 and 3. The presence of both the amine and the alkanolamine is said by the patentees to be essential since there appears to be a synergistic effect between them which provides the good adhesion. Use of the amine or alkanolamine alone does not provide good adhesion.

We have now surprisingly found that certain long chain amine derivatives and compositions based on them have some advantageous properties and a wide variety of uses.

Accordingly, the present invention comprises an hydroxylated amine compound having the formula:

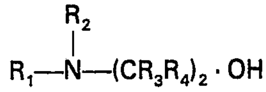

where $R_1$ and $R_2$, which may be the same or different, are selected from hydrogen, with the proviso that $R_1$ and $R_2$ are not both hydrogen, and long chain alkyl groups containing 13 or 15 carbon atoms, the groups being both straight chain and branched, the amount of branching being in the range 30 to 70%, and where $R_3$ and $R_4$, which may be the same or different, are selected from hydrogen or lower alkyl groups containing 1 to 4 carbon atoms. $R_3$ and $R_4$ are preferably hydrogen or methyl groups, and more preferably are both hydrogen.

A preferred embodiment of the present invention comprises mixtures of hydroxylated amine compounds, as hereinbefore defined, in which the substituents $R_1$ and $R_2$ comprise long chain alkyl groups containing 13 or 15 carbon atoms comprising approximately 65 to 75% $C_{13}$ groups with approximately 35 to 25% $C_{15}$ groups (these percentages being calculated on the total of long chain alkyl groups) with approximately 40 to 55 wt % straight chain and 60 to 45% 2-alkyl branched chain where the 2-alkyl groups are predominantly methyl. The derivative of this preferred embodiment is hereinafter referred to as "Synprolam" (Registered Trade Mark) D35X1.

In another preferred embodiment of this invention, one of the substituents $R_1$ and $R_2$ is hydrogen and the other is selected from long chain alkyl groups containing 13 or 15 carbon atoms, the groups being both straight chain and branched, the amount of branching being in the range 30 to 70%, and $R_3$ and $R_4$ are both hydrogen. More preferably, the substituent $R_1$ or $R_2$ which is not hydrogen comprises long chain alkyl groups containing 13 or 15 carbon atoms comprising approximately 65 to 75% $C_{13}$ groups with approximately 35 to 25% $C_{15}$ groups (these percentages being calculated on the total of long chain alkyl groups) with approximately 40 to 55 wt % straight chain and 60 to 45% 2-alkyl branched chain where the 2-alkyl group is predominantly methyl. The derivative of this preferred embodiment is hereinafter referred to as "Synprolam" (Registered Trade Mark) 35X1.

Hydroxylated amine compounds according to this invention are conveniently prepared by the reaction of an aldehyde of formula $R_5CHO$ where $R_5$ is an alkyl group containing 12 or 14 carbon atoms and a monalkanolamine $NH_2 \cdot (CR_3R_4)_2 \cdot OH$ where $R_3$ and $R_4$ have the meanings hereinbefore described, in the presence of a suitable catalyst, for example a nickel catalyst, for example Raney nickel. However, the use of other hydrogenation catalysts in the process of this invention is not ruled out.

Some hydroxylated amine compounds according to the invention for example "Synprolam D35X1 are conveniently prepared by normal

amine alkoxylation, for example ethoxylation methods but compounds in which one of $R_1$ and $R_2$ is hydrogen, for example "Synprolam" 35X1 cannot be obtained so readily or in a suitably pure condition by such methods because of the difficulty of ensuring that only one mole of alkylene oxide reacts with the amine.

The products of this invention have a wide variety of uses for example as emulsifiers, anti-caking gents, flotation agents, corrosion inhibitors, antistatic agents and also for example as chemical intermediates leading to other useful chemical compounds.

The compounds of this invention, their manufacture and use are further illustrated in the following Examples.

Example 1
Manufacture of "Synprolam" 35X1

Monoethanolamine (122g), Raney nickel catalyst (45g) and methanol (340g) were heated in an autoclave to 110°C under 435psig (30.58 Kg/cm²g) hydrogen pressure. To this mixture a mixture of $C_{13}$ and $C_{15}$ aldehydes (416g) was added over 2 hours and the mixture was stirred at 110°C and 435psig (30.58 Kg/cm²g) pressure for a further 30 minutes. (The mixture of $C_{13}$ and $C_{15}$ aldehydes had the composition: (all parts by weight).

| | |
|---|---|
| Hydrocarbons | 1.0% |
| $C_{11}$ aldehydes | 1.4% |
| $C_{13}$ aldehydes | 66.5% |
| $C_{15}$ aldehydes | 31.2% |
| Unidentified heavy ends | 1.9%) |

After cooling, the product was filtered and the methanol removed by evaporation at reduced pressure. The final product (510g), "Synprolam" 35X1, contained 83% of N ($C_{13}$ to $C_{15}$ alkyl), N-(2-hydroxy ethyl) amine.

Example 2
Use of "Synprolam" 35X1 as a bitumen adhesion agent

The final product obtained in Example 1 was added to bitumen at a level in the range 0.05 to 2.5% by weight to improve the adhesion between the bitumen and an aggregate used in the road-making industry.

100g of 200 penetration low acid value bitumen was heated to 80°C. To this was added 1.8g of the final product from Example 1 ("Synprolam" 35X1) and the mixture was stirred for five minutes. A further 200g of the bitumen previously heated to 80°C was added and the mixture stirred for a further 10 minutes.

The treated bitumen (230g) was passed into a 250ml conical flask and lightly stoppered. The flask and its contents were then heated at 135°C for 5 days. The adhesion of the thus-treated bitumen to road aggregate was tested in a tray test as follows.

The heat-treated bitumen (20g) was placed in a 5" diameter clean tin lid to an overall depth of 1.5mm and then allowed to stand for 30 minutes on a level surface at 20 to 25°C. The lid and bitumen was then immersed to a depth of 2.5 cm in demineralised water at 25°C. Ten selected clean granite chippings from the Mountsorrel quarry, Leicestershire were lightly pressed into the bitumen surface and left in contact for 5 minutes. the chippings were then turned over. The percentage of bitumen retained on the chippings was assessed visually at 30%.

In comparative tests, it was found that the chippings retained no bitumen when no additive was used. When the same quantity of N-(tallow alkyl)-1,3 propylene diamine was used in place of the "Synprolam" 35X1 the percentage of bitumen retained was assessed at 20%.

Example 3
Manufacture of "Synprolam" D35X1

Monoethanolamine (91.6g), Raney nickel catalyst (23g) and methanol (450g) were heated to 110°C in an autoclave under 435psig (30.58 Kg/cm²g) hydrogen pressure. To this mixture was added over 2 hours 624g of the mixture of $C_{13}$ and $C_{15}$ aldehydes used in Example 1 and the mixture was stirred at 110°C and 435psig (30.58 Kg/cm²g) pressure for a further 30 minutes. After cooling, the product was filtered and the methanol removed by evaporation at reduced pressure to give a final product, "Synprolam" D35X1, containing 52% of N,N- di ($C_{13}$ to $C_{15}$ alkyl) N- (2 hydroxyethyl) amine.

**Claims**

1. An hydroxylated amine compound having the formula:

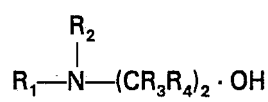

where $R_1$ and $R_2$, which may the same or different, are selected from hydrogen, with the proviso that $R_1$ and $R_2$ are not both hydrogen, and long chain alkyl groups containing 13 or 15 carbon atoms, the groups being both straight chain and branched, the amount of branching being in the range 30 to 70%, and $R_3$ and $R_4$, which may be the same or different, are selected from hydrogen and lower alkyl groups containing 1 to 4 carbon atoms.

2. An hydroxylated amine compound as claimed in claim 1 in which $R_3$ and $R_4$ are both hydrogen.

3. An hydroxylated amine compound as claimed in claim 1 in which one of the substituents $R_1$ and $R_2$ is hydrogen and the other is selected from long chain alkyl groups containing 13 or 15 carbon atoms, the groups being both straight chain and branched, the amount of branching being in the range 30 to 70%, and $R_3$ and $R_4$ are both hydrogen.

4. Mixtures of hydroxylated amine compounds as claimed in claim 2 or 3 in which the long chain alkyl groups containing 13 or 15 carbon atoms comprise approximately 65 to 75% $C_{13}$ groups with approximately 35 to 25% $C_{15}$ groups (these percentages being calculated on the total of long chain alkyl groups) with approximately 40 to 55 wt % straight chain and 60 to 45% 2-alkyl branched chain where the 2-alkyl group is predominantly methyl.

5. A process for increasing the adhesion of a bituminous substance to stone materials which comprises adding to the bituminous substance at least one hydroxylated amine compound or a mixture of hydroxylated amine compounds as claimed in any one of claims 1 to 4.

**Patentansprüche**

1. Hydroxylierte Aminverbindung der Formel:

$$\begin{array}{c} \quad R_2 \\ \quad | \\ R_1\text{—}N\text{—}(CR_3R_4)_2\cdot OH \end{array}$$

worin

$R_1$ und $R_2$, die gleich oder verschieden sein können, aus Wasserstoff (unter der Bedingung, daß $R_1$ und $R_2$ nicht beide Wasserstoff sind) und 13 oder 15 Kohlenstoffatome enthaltenden, langkettigen Alkylgruppen, die sowohl geradkettig als auch verzweigt sind, wobei der Verzweigungsanteil in dem Bereich von 30 bis 70% liegt, und

$R_3$ und $R_4$, die gleich oder verschieden sein können, aus Wasserstoff und 1 bis 4 Kohlenstoffatome enthaltenden, niederen Alkylgruppen

ausgewählt sind.

2. Hydroxylierte Aminverbindung nach Anspruch 1, worin $R_3$ und $R_4$ beide Wasserstoffatome sind.

3. Hydroxylierte Aminverbindung nach Anspruch 1, worin einer der Substituenten $R_1$ und $R_2$ ein Wasserstoffatom ist und der andere aus 13 oder 15 Kohlenstoffatome enthaltenden, langkettigen Alkylgruppen, die sowohl geradkettig als auch verzweight sind, wobei der Verzweigungsanteil in dem Bereich von 30 bis 70% liegt, ausgewählt ist und $R_3$ und $R_4$ beide Wasserstoffatome sind.

4. Mischungen hydroxylierter Aminverbindungen nach Anspruch 2 oder 3, in denen die 13 oder 15 Kohlenstoffatome enthaltenden, langkettigen Alkylgruppen aus etwa 65 bis 75% $C_{13}$-Gruppen und etwa 35 bis 25% $C_{15}$-Gruppen (wobei diese Prozentsätze auf die Gesamtmenge der langkettigen Alkylgruppen berechnet sind) mit etwa 40 bis 55 Gew.-% geraden Ketten und 60 bis 45% in 2-Stellung alkylverzweigten Ketten, woebi als in 2-Stellung befindliche Seitenketten-Alkylgruppe die Methylgruppe überwiegt, bestehen.

5. Verfahren zur Erhöhung der Haftung eines bituminösen Stoffes an Steinmaterialien, bei dem zu dem bituminösen Stoff mindestens eine hydroxylierte Aminverbindung oder eine Mischung hydroxylierter Aminverbindungen nach einem der Ansprüche 1 bis 4 zugegeben wird.

**Revendications**

1. Dérivé d'amine hydroxylée de formule:

$$\begin{array}{c} \quad R_2 \\ \quad | \\ R_1\text{—}N\text{—}(CR_3R_4)_2\cdot OH \end{array}$$

où $R_1$ et $R_2$, qui peuvent être identiques ou différents, sont choisis entre l'hydrogène, avec la restriction que $R_1$ et $R_2$ ne sont pas tous deux de l'hydrogène, et les radicaux alcoyle à longue chaîne comptant 13 ou 15 atomes de carbone, les radicaux étant en chaîne tant droite que ramifiée, le degré de ramification étant de 30 à 70%, et $R_3$ et $R_4$, qui peuvent être identiques ou différents, sont choisis entre l'hydrogène et les radicaux alcoyle inférieurs comptant 1 à 4 atomes de carbone.

2. Dérivé d'amine hydroxylée suivant la revendication 1, dans lequel $R_3$ et $R_4$ sont tous deux de l'hydrogène.

3. Dérivé d'amine hydroxylée suivant la revendication 1, dans lequel l'un des substituants $R_1$ et $R_2$ est l'hydrogène et l'autre est choisi parmi les radicaux alcoyle à longue chaîne comptant 13 ou 15 atomes de carbone, les radicaux étant en chaîne tant droite que ramifiée et le degré de ramification étant de 30 à 70% et $R_3$ et $R_4$ sont tous deux de l'hydrogène.

4. Mélanges de dérivés d'amines hydroxylées suivant la revendication 2 ou 3, dans lesquels les radicaux alcoyle à longue chaîne comptant 13 ou 15 atomes de carbone comprennent environ 65 à 75% de radicaux en $C_{13}$ et environ 35 à 25% de radicaux en $C_{15}$ (ces pourcentages étant calculés sur le total des radicaux alcoyle à longue chaîne) avec environ 40 à 55% de chaîne droite et 60 à 45% de chaîne 2-alcoylramifiée dont le radical 2-alcoyle est principalement un radical méthyle.

5. Procédé pour augmenter l'adhérence d'une substance bitumineuse sur des matières pierreuses, qui comprend l'addition à la substance bitumineuse d'au moins un dérivé d'amine hydroxylée ou d'un mélange de dérivés d'amines hydroxylées suivant l'une quelconque des revendications 1 à 4.